Europäisches Patentamt

**European Patent Office**

Office européen des brevets

(19)

(11) Numéro de publication: **0 062 370 B1**

(12) **FASCICULE DE BREVET EUROPEEN**

(45) Date de publication du fascicule du brevet: **29.05.85**

(51) Int. Cl.⁴: **B 62 D 1/26**

(21) Numéro de dépôt: **82200356.2**

(22) Date de dépôt: **24.03.82**

(54) **Système de guidage automatique d'un véhicule muni de roues à bandage pneumatique.**

(30) Priorité: **02.04.81 LU 83276**

(43) Date de publication de la demande:
**13.10.82 Bulletin 82/41**

(45) Mention de la délivrance du brevet:
**29.05.85 Bulletin 85/22**

(84) Etats contractants désignés:
**AT BE CH DE FR GB IT LI NL SE**

(56) Documents cités:
**DE-C- 221 586**
**FR-A-1 131 357**
**FR-A-1 131 358**
**FR-A-2 307 693**

(73) Titulaire: **S.A. CONSTRUCTIONS FERROVIAIRES ET METALLIQUES**
**Rue Royale 30**
**B-1000 Bruxelles (BE)**

(72) Inventeur: **Cuylits, Jacques**
**rue Roberts Jones, 68**
**B-1180 Bruxelles (BE)**
Inventeur: **Lenssen, Paul**
**Lindenlaan 43**
**B-8202 Varsenare (BE)**
Inventeur: **Chatelle, Philippe**
**Avenue du Capricorne, 26**
**B-1200 Bruxelles (BE)**

(74) Mandataire: **De Brabanter, Maurice et al**
**Bureau VANDER HAEGHEN 63 Avenue de la Toison d'Or**
**B-1060 Bruxelles (BE)**

EP 0 062 370 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

La présente invention est relative à un système de guidage automatique d'un véhicule muni d'au moins un essieu directionnel portant des roues à bandage pneumatique, éventuellement motrices.

Elle concerne, en particulier, un système de guidage d'un véhicule du type bimode, c'est-à-dire d'un véhicule, guidé alternativement, soit par un système automatique de type mécanique, utilisé lorsque le véhicule circule sur une infrastructure propre, soit manuellement, par un chauffeur, lorsque le véhicule circule de manière autonome.

On connaît, par le brevet français No. 1.131.357, un système de guidage automatique pour véhicules dont les roues sont munies de bandages pneumatiques comprenant des moyens de commande agissant sur chacun des leviers de direction des roues, ainsi que des moyens pour relever les moyens de commande susdits et les dégager d'un rail, en vue de guider le véhicule autrement que par rail.

Ce système connu a le désavantage d'être unidirectionnel, c'est-à-dire de ne pas pouvoir être utilisé dans les deux sens de marche.

Il présente également le désavantage de ne pas pouvoir empêcher une dérive exessive des roues à bandage pneumatique ni un dérapage de celles-ci. La sécurité se trouve diminuée par le fait que ledit système ne comprend aucun moyen pour obliger de véhicule à suivre exactement le trajectoire prévue.

On connaît également, par le brevet français No. 1.131.358, un système de guidage automatique bidirectionnel pour véhicules rigides ou articulés, muni d'au moins un essieu directionnel portant des roues à bandage pneumatique, éventuellement motrices, comprenant au moins un premier galet destiné à suivre un rail s'étendant dans l'axe longitudinal de la voie de roulement du véhicule, ou parallèlement à cet axe. Chaque galet est monté sur un bras constitué de deux bielles articulées chacune sur le côté d'un petit arbre vertical qui transmet l'impulsion directionnelle à un levier de direction des roues directrices du véhicule.

Ce système de guidage connu n'autorise aucun écart transversal de l'essieu et des roues par rapport à la trajectoire prévue. Toute dérive même normale des roues à bandage pneumatique soumet les deux galets susdits et le rail à des sollicitations transversales, puisque ces deux galets sont fixés rigidement l'un à l'autre par l'intermédiaire des paires de bielles précitées.

Les roues à bandage pneumatique n'ont, de ce fait, qu'un rôle de sustentation et non de positionnement transversal.

Le montage en parallélogramme des bras portant les galets de guidage a pour effet de maintenir les axes de rotation des galets parallèles à l'axe du corps d'essieu. Aussi, en s'inscrivant dans les courbes, les galets forment-ils avec le rail un angle d'incidence qui les amène à évoluer dans des conditions d'usure et de bruyance défavorables. Si la courbe est très forte, l'angle d'incidence peut devenir excessif et accroître considérablement les risques de déraillement.

Ce système connu ne comporte pas de moyens de relevage du dispositif de guidage, qui permettrait une utilisation de véhicules de type bimode, c'est-à-dire de véhicules guidés alternativement, soit par un dispositif automatique de type mécanique en utilisation sur son infrastructure propre, soit par la chauffeur en utilisation autonome.

La présente invention vise à remédier aux inconvénients des systèmes de guidage automatiques connus.

L'invention a pour objet un système de guidage automatique d'un véhicule du type bimode comportant les caractéristiques de FR—A—1131358, c'est à dire muni d'au moins un essieu directionnel portant des roues à bandage pneumatique, éventuellement motrices, comprenant au moins un premier galet destiné à suivre un rail s'étendans dans l'axe longitudinal de la voie de roulement du véhicule ou parallèlement à cet axe et porté par un bras de support s'étendant dans le sens de déplacement du véhicule par rapport à l'essieu directionnel, ce bras de support pouvant osciller verticalement autour d'un axe sensiblement horizontal et étant assujetti à une tourelle montée sur un pivot sensiblement vertical porté par ledit essieu directionnel ou par le véhicule et reliée à au moins une barre d'accouplement articulée à un levier de direction d'une des roues portées par l'essieu directionnel et au moins un second galet porté par un second bras de support s'étendant dans le sens opposé au sens de déplacement du véhicule par rapport à l'essieu directionnel, ce second bras pouvant également osciller verticalement autour d'un axe sensiblement horizontal, ce système étant en outre essentiellement caractérisé en ce que ce second bras est assujetti à la tourelle montée sur le pivot susdit de manière à pouvoir pivoter horizontalement autour d'un axe sensiblement vertical, indépendamment de la tourelle susdite, dans une mesure prédéterminée.

Dans une forme de réalisation du dispositif suivant l'invention, le bras de support du second galet, s'étendant dans le sens opposé au sens de déplacement du véhicule, est articulé à la tourelle par un pivot sensiblement horizontal porté par un croisillon qui peut tourillonner indépendamment de la tourelle, dans une mesure prédéterminée, autour du pivot sensiblement vertical porté par la tourelle.

Le système de guidage automatique suivant l'invention, tel qu'il est défini dans les trois paragraphes précédents, est du type unidirectionnel, c'est-à-dire qu'il ne permet le guidage automatique du véhicule que dans un seul sens de déplacement de celui-ci.

Le système de guidage suivant l'invention peut cependant être également du type bidirectionnel, c'est-à-dire qu'il peut être agencé pour permettre le guidage automatique du véhicule dans les deux sens de déplacement de celui-ci.

Dans le cas d'un système de guidage automatique bidirectionnel suivant l'invention, le premier galet est assujetti à la tourelle montée sur le pivot porté par l'essieu directionnel ou par le véhicule, de manière à pouvoir également pivoter horizontalement autour d'un axe sensiblement vertical, indépendamment de la tourelle, dans une mesure prédéterminée. Le système de guidage comporte alors des moyens pour empêcher un des deux bras de support portant respectivement le premier et le second galets de pivoter horizontalement autour desdits pivots sensiblement verticaux distincts du pivot de la tourelle.

Les moyens pour empêcher un des deux bras portant respectivement le premier et le second galets de pivoter horizontalement comprennent, de préférence, un levier d'inversion de marche articulé à une extrémité à un tourillon porté par la tourelle et muni de chaque côté d'un bossage susceptible de s'engager dans un logement ménagé dans un prolongement d'un des croisillons portés chacun par un pivot sensiblement horizontal de chaque bras de support, le levier d'inversion de marche susdit étant actionné par des moyens à mouvement alternatif, de façon à amener un des bossages dudit levier dans le logement correspondant du prolongement d'un des croisillons et à dégager l'autre bossage.

Les galets sont maintenus en contact avec le rail de guidage par un système de suspension, de préférence par un double système de suspension comportant deux éléments de suspension distincts, aptes à maintenir chacun séparément les galets en contact avec le rail, par exemple un ressort hélicoïdal et un dispositif pneumatique sensiblement coaxiaux.

Le système de guidage automatique suivant l'invention comporte également des moyens de relevage des bras de support des galets. Ces moyens comportent avantageusement un vérin de relevage à double effet, comprenant un cylindre monté sur le pivot horizontal d'un bras de support et un piston articulé à une extrémité d'un levier, dont l'autre extrémité est articulée à un prolongement de la tourelle ou d'un croisillon respectivement au prolongement de l'autre croisillon, ainsi que, de chaque côté du bras de support, un câble dont une extrémité est attachée à un bras de support d'un galet et dont l'autre extrémité est attachée au levier précité d'un côté du bras de support et à une manivelle solidaire du levier, de l'autre côte du bras de support.

Selon une particularité complémentaire de l'invention, le système de guidage suivant l'invention comporte un dispositif de guidage autre que le rail de guidage et pouvant être, par exemple manuel, ce dispositif de guidage commandant l'orientation des roues du véhicule, par exemple par l'intermédiaire de la tourelle ou par l'intermédiaire d'un des leviers de direction des roues, ce dispositif de guidage pouvant à volonté embrayé ou débrayé.

Dans l'âme du galet est avantageusement ménagée une gorge périphérique de telle sorte que les galets présentent, de part et d'autre de cette gorge, une bande de roulement sur le rail de guidage du véhicule. Cette gorge périphérique est destinée à s'engager dans une saillie du rail s'étendant le long des tronçons où le véhicule est destiné à circuler en site propre.

D'autres particularités et détails de l'invention ressortiront de la description détaillée suivante des dessins annexés au présent mémoire, qui représentent, à titre d'exemples non limitatifs, quelques formes de réalisation d'un système de guidage automatique d'un véhicule du type bimode suivant l'invention.

Dans ces dessins:
— la figure 1 est une vue en plan d'un essieu directionnel de roues à bandage pneumatique, équipé d'un système de guidage automatique unidirectionnel suivant l'invention;
— la figure 2 est une coupe suivant la ligne II—II de la figure 1;
— la figure 3 est une vue en élévation latérale dans le sens de la flèche Y de la figure 1;
— la figure 4 montre un galet coopérant avec un rail de guidage;
— la figure 5 est une vue semblable à celle de la figure 1, montrant un système de guidage automatique bidirectionnel suivant l'invention;
— la figure 6, est à plus grande échelle, une vue en plan de dessous partielle du système de guidage bidirectionnel selon la figure 5;
— la figure 7 est une vue semblable à celle de la figure 2, du système de guidage automatique bidirectionnel de la figure 5;
— les figures 8 et 9 sont des vues semblables à celles des figures 1 et 5, montrant chacune un dispositif de guidage autre que le rail unique, ce dispositif de guidage étant muni d'un embrayage permettant une utilisation bimode du véhicule;
— la figure 10 montre schématiquement en coupe partielle suivant la ligne X—X de la figure 8, un dispositif de guidage différent du rail, destiné à être associé, par un dispositif d'embrayage, à un bras de direction de la tourelle dont est muni le système de guidage;
— la figure 11 montre schématiquement en coupe partielle suivant la ligne XI—XI de la figure 9, des moyens pour désolidariser le système de guidage automatique d'un essieu directionnel, lorsque le véhicule est en conduite manuelle;
— la figure 12 est une vue en plan partielle d'une variante du système de guidage automatique des figures 1 et 5 comportant un dispositif permettant le franchissement contrôlé d'aiguillages statiques, et
— la figure 13 est une vue en plan d'un aiguillage statique formé de tronçons de rail similaires à celui représenté à la figure 4;
— la figure 14 est une vue analogue à la figure 1 et montre un essieu directionnel à roues motrices;
— la figure 15 est une vue analogue à la figure 2 suivant la ligne XV—XV de la figure 14;
— la figure 16 est une vue en élévation latérale d'un essieu directionnel de roues à bandage pneumatique, équipé d'un système de guidage automatique unidirectionnel comportant des bras présentant une certaine flexibilité dans le plan vertical.

Dans ces différentes figures, les mêmes notations de référence désignent des éléments identiques.

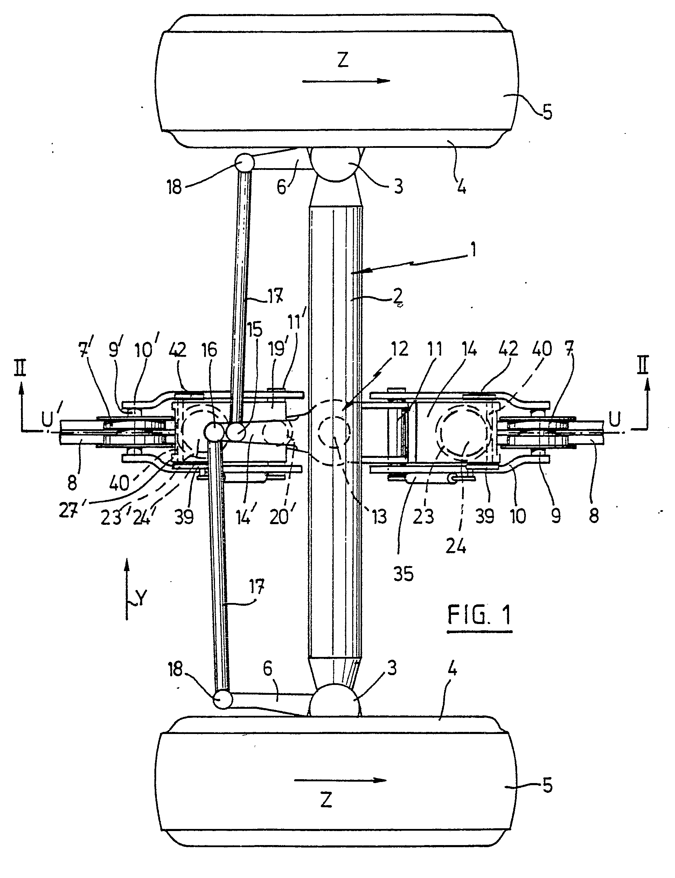

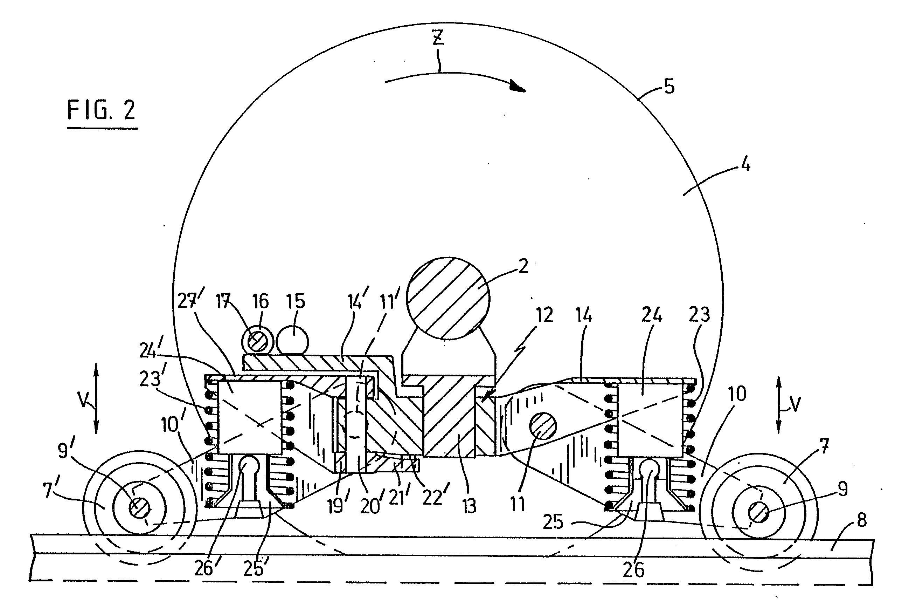

Les figures 1 à 3 représentent un essieu directionnel, désigné dans son ensemble par la notation de référence 1 et comportant un corps 2 muni à chacune de ses extrémités de fusées d'axe 3 de roues 4 à bandage pneumatique 5 auxquelles sont fixés des leviers de direction 6. Sur cet essieu 1 est monté un système de guidage automatique unidirectionnel suivant l'invention comprenant un galet 7 destiné à être engagé dans un rail 8 s'étendant dans l'axe longitudinal U—U' de la voie de roulement d'un véhicule non représenté.

Ce galet 7 est monté sur un arbre 9 porté par un bras de support 10 s'étendant dans le sens de déplacement du véhicule indiqué par les flèches Z par rapport à l'essieu directionnel 1. Le bras de support 10 peut osciller verticalement suivant les flèches V autour d'un pivot sensiblement horizontal 11 porté par une tourelle désignée dans son ensemble par la notation de référence 12, montée sur un pivot 13 fixé sur le corps 2 de l'essieu directionnel 1. Ce pivot 13 qui peut être porté par le véhicule plutôt que par l'essieu 1, s'étend en direction sensiblement verticale ou oblique en dessous du corps 2 de l'essieu.

Le pivot 11 du bras 10 est en fait porté par un premier prolongement 14 de la tourelle 12, qui peut avoir une section transversale en forme de U renversé et est solidaire de cette tourelle 12.

Dans le sens opposé au sens de déplacement du véhicule, la tourelle 12 comporte un second prolongement 14' portant des rotules 15, 16 qui la relient à des barres d'accouplement 17 articulées en 18 au levier de direction 6 de chaque roue 5.

Un croisillon 19' est assujetti au second prolongement 14' de la tourelle 12 par un pivot sensiblement vertical 20'.

Au croisillon 19' est suspendu par un pivot sensiblement horizontal 11' un second bras de support 10' s'étendant dans le sens opposé à celui du déplacement du véhicule, ce bras de support 10' portant l'arbre 9' d'un second galet 7'. Ce bras de support 10' peut ainsi osciller verticalement autour du pivot sensiblement horizontal 11' de la même manière que le bras de support 10. Le bras de support 10' peut également pivoter horizontalement, indépendamment de la tourelle 12 autour du pivot sensiblement vertical 20' du croisillon 19'.

Le croisillon 19' présente un appendice inférieur 21' limitant le pivotement horizontal de ce croisillon 19' et du bras de support 10' dans une mesure prédéterminée, entre des butées 22' portées par la tourelle 12 de part et d'autre de l'appendice inférieur 21' du croisillon 19'.

En vue d'appliquer les galets 7, 7' fermement contre le rail 8, les bras de support 10, 10' des galets 7, 7' sont suspendus respectivement aux prolongements 14 et 27' de la tourelle 12 respectivement du croisillon 19' par un système de suspension, de préférence un double système de suspension comportant deux éléments de suspension distincts constitués, dans la forme de réalisation représentée, par des ressorts hélicoïdaux 23, 23' et des dispositifs pneumatiques 24, 24'.

Le ressort hélicoïdal 23 prend appui, d'une part, sur le premier prolongement 14 de la tourelle 12 et, d'autre part, sur une embase 25 supportée par un dispositif à articulation 26, tel qu'un pivot sensiblement horizontal ou une rotule, porté par le bras de support 10, tandis que le dispositif pneumatique 24 prend également appui sur le premier prolongement 14 de la tourelle 12 et sur l'embase 25 supportée par le dispositif à articulation 26 porté par le bras de support 10 du galet 7.

Quant au ressort hélicoïdal 23', il prend appui, d'une part, sur un prolongement 27' du croisillon 19', porté par le prolongement 14' et, d'autre part sur une embase 25' supportée par un dispositif à articulation 26' tel qu'un pivot sensiblement horizontal ou une rotule, porté par le bras de support 10' du galet 7', tandis que le dispositif pneumatique 24' prend également appui sur le prolongement 27' du croisillon 19' et, par l'intermédiaire de l'embase 25', sur le dispositif à articulation 26' porté par le bras de support 10' du galet 7'.

Le ressort hélicoïdal 23 et le dispositif pneumatique 24, de même que le ressort hélicoïdal 23' et le dispositif pneumatique 24' sont coaxiaux. Ces systèmes de suspension sont destinés à assurer un guidage et un contact adéquats des galets 7, 7' sur le rail 8. La pression des dispositifs pneumatiques 24, 24' est ajustée, afin que la pression et la valeur limite de retenur transversale des galets 7, 7' sur le rail 8 soient maintenues sensiblement proportionnelles au poids total (tare + charge utile) appliqué à chaque essieu du véhicule.

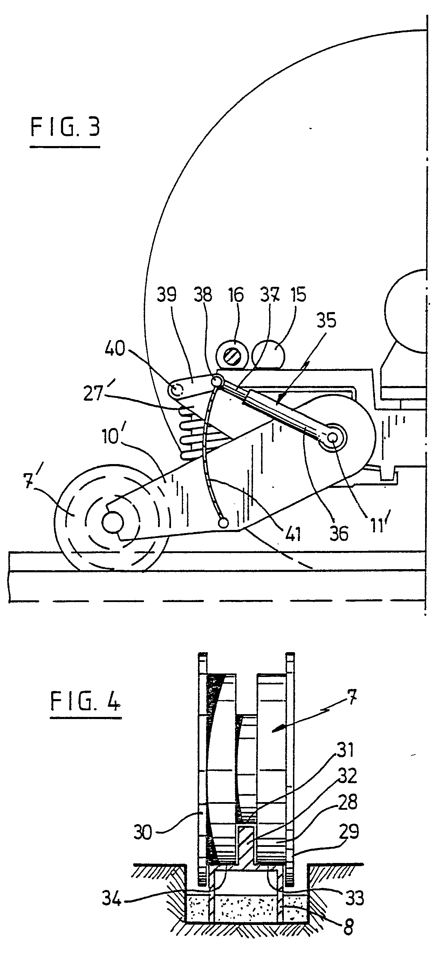

Comme on le voit aux figures 1 et 4, chaque galet 7, 7' comporte une âme 28 insérée entre deux bourrelets 29, 30. Dans l'âme 28 de chaque galet 7, 7' est éventuellement ménagée une gorge 31 destinée à recevoir une saillie 32 du rail 8 lorsque le véhicule circule en site propre. L'âme 28 des galets 7, 7' présente, de part et d'autre de la gorge 31, une bande de roulement 33, 34 dont le rôle sera expliqué plus loin.

Le système de guidage montré partiellement aux figures 1 et 3 comporte des moyens de relevage des bras de support, par exemple du bras 10'. Ces moyens de relevage comportent un vérin de relevage à double effet 35, comprenant un cylindre 36 monté sur le pivot 11' du bras de support 10' et un piston 37, articulé en 38, à une extrémité d'un levier 39, dont l'extrémité opposée est articulée par l'intermédiaire d'un arbre 40 au prolongement 27' du croisillon 19', ainsi que de chaque côté du bras de support 10', un câble 41, dont une extrémité est attachée au bras de support 10' et l'autre est attachée au levier 39, d'un côté du bras de support 10', et à une manivelle 42 solidaire du levier 39 par l'arbre 40, de l'autre côté du bras de support 10'.

Le bras de support 10' du galet 7' peut être relevé en actionnant le vérin 35, dont le piston 37 fait pivoter le levier 39 et la manivelle 42 dans le sens sinistrorsum (figure 3), de manière à tendre les câbles 41, qui sont courbés en position relâchée, et à relever ainsi le galet 7' et son bras de support 10'.

L'agencement des éléments de relevage de chaque bras de support, par exemple du bras 10', est tel qu'en position relevée, ces éléments occupent une position stable, même si une perte de pression hydraulique se produit dans le vérin de relevage 35. Cette stabilité est assurée par le basculement du levier 39 et de la manivelle 42 au-delà de la position tendant à les faire revenir dans le sens dextrorsum (Figure 3).

Lorsqu'il est engagé dans le rail 8 en vue d'un guidage automatique, le galet avant 7 corrige les déviations éventuelles de trajectoire de l'essieu directionnel 1 par rapport au rail de guidage 8 et les transmet par un mouvement de rotation au bras de support 10 qui entraîne la tourelle 12.

Par l'intermédiaire des barres d'accouplement 17 et des rotules 14, 16, la tourelle 12 communique son orientation, tenant compte de la valeur de dérive des bandages pneumatiques 5, aux leviers de direction 6 qui corrigent le braquage des roues 4 portées par l'essieu.

La distance entre le pivot 13 sur lequel est montée la tourelle 12 et les rotules 15, 16 par lesquelles cette tourelle 12 est reliée aux barres d'accouplement 17 est telle que la tourelle 12 oscille d'un angle inférieur à celui de la moyenne du braquage des roues 4 portées par l'essieu 1.

L'axe de symétrie de l'essieu 1, perpendiculaire à l'axe longitudinal de l'essieu 1, ainsi dirigé, se rapproche du rail 8. De ce fait, l'angle de rotation de la tourelle 12 diminue jusqu'à ce qu'il y ait autostabilisation des rotations et évolution concourante de l'axe de symétrie susdit de l'essieu 1 et du rail 8.

La liberté de pivotement horizontal du galet arrière 7', autorise de légers écarts transversaux de l'essieu 1 par rapport à la trajectoire du rail 8, tout en permettant que le galet 7' reste engagé dans ce rail.

Le bras de support 10' à liberté de pivotement horizontal ne se heurte aux butées 22 qu'en cas de dérive anormale ou dérapage dudit essieu 1. Les deux galets 7, 7' ont alors pour mission de retenir l'essieu 1 transversalement par rapport à sa trajectoire prévue et d'empêcher tout glissement latéral supplémentaire du véhicule.

Une légère inclinaison du pivot 20' du croisillon 19' par rapport au plan vertical est destinée à incliner légèrement la galet 7' sur le rail 8 de façon à compenser tout effet de dévers transversal de l'essieu 1. Cette inclinaison du galet 7' assure un accrochage optimum de ce galet 7' sur le rail 8.

Comme indiqué plus haut, chaque galet 7, 7' présente une âme 28 insérée entre deux bourrelets 29, 30 éventuellement coniques, cette âme étant, par exemple de forme sensiblement cylindrique à légèrement bitronconique, notamment en diabolo.

Dans la gorge périphérique 31 est destinée à s'engager la saillie complémentaire 32 s'étendant le long des tronçons du rail 8 où le véhicule est destiné à circuler en site propre. Cette saillie 32 du rail 8 et la gorge 31 de l'âme 28 des galets 7, 7' assurant une sécurité de guidage supplémentaire à celle déjà assurée par le rail 8 et les bourrelets 29 et 30 des galets 7, 7'. Cette saillie 32 présente de plus l'avantage d'éliminer pratiquement tout risque de déraillement des galets 7, 7' puisqu'elle ne peut pas être obstruée par un objet quelconque déposé sur la voie.

Au cas où le véhicule est mû par traction électrique, les galets 7, 7' sont destinés à assurer le retour du courant électrique capté par exemple par un pantographe sur un fil unique. Le retour du courant est ainsi assuré par roulement et non par friction, tout problème d'usure de patins étant ainsi évité.

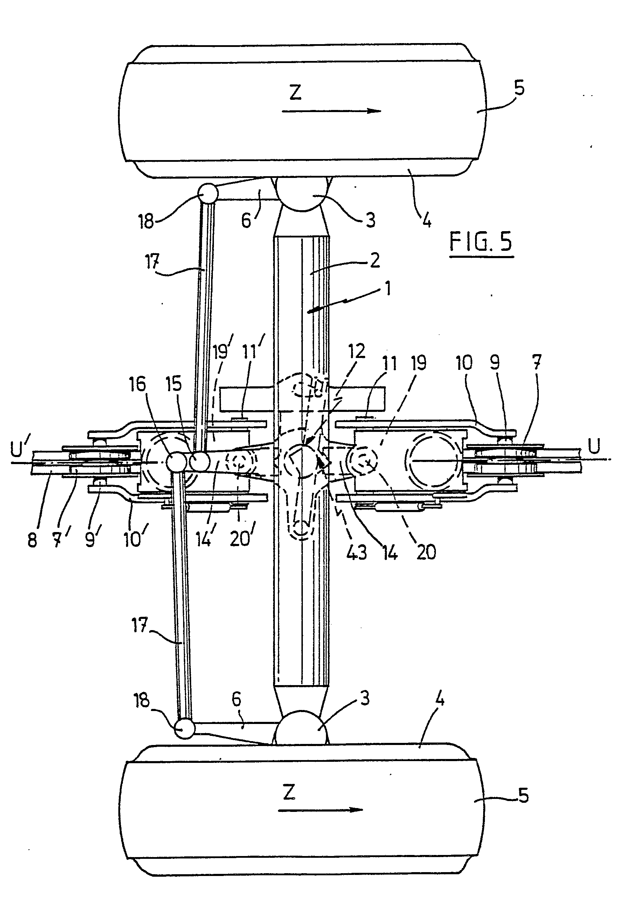

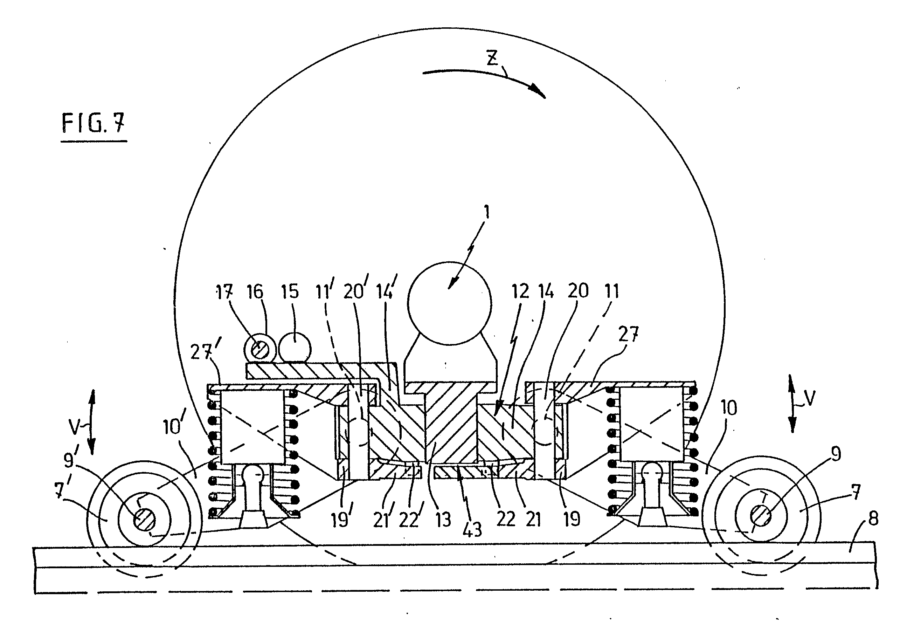

Les figures 5 à 7 représentent un essieu directionnel 1 sur lequel est monté un système de guidage automatique bidirectionnel. Celui-ci comporte, tout comme le système de guidage unidirectionnel, des galets 7, 7', destinés à être engagés dans un rail 8. Ces galets 7, 7' sont montés sur des arbres 9, 9' portés par des bras de support 10, 10'.

Le système bidirectionnel se distingue cependant du système unidirectionnel illustré aux figures 1 à 3, par le fait que les bras de support 10, 10' sont assujettis à la tourelle 12 de manière à pouvoir tous deux osciller verticalement et pivoter horizontalement indépendamment de la tourelle 12 dans une mesure prédéterminée.

Dans ce but, la tourelle 12 comporte de chaque côté correspondant aux sens opposés de déplacement possibles du véhicule des prolongements 14, 14'. A ces prolongements 14, 14' sont assujettis par des pivots sensiblement verticaux 20, 20' des croisillons 19, 19' auxquels sont suspendus les bras de support 10, 10' par des pivots sensiblement horizontaux 11, 11'.

Ces bras de support 10, 10' s'étendent dans les deux sens de déplacement possibles du véhicule. Ils peuvent osciller verticalement suivant les flèches V autour des pivots 11, 11' sensiblement horizontaux. Le pivotement horizontal des croisillons 19, 19' et des bras de support 10, 10' est limité par des appendices inférieurs 21, 21' que présentent les croisillons 19, 19' entre les butées 22, 22' portées par la tourelle 12.

Aux figures 5 à 7, la suspension des bras de support 10, 10' est réalisée de la même manière que dans la forme de réalisation du système unidirectionnel montré aux figures 1 à 3. Il en est de même des moyens de relevage et de leur agencement.

Un des prolongements 14, 14', par exemple le prolongement 14', porte des rotules 15, 16 qui le relient aux barres d'accouplement 17 articulées en 18 au levier de direction 6 de chaque roue 4.

Comme dans la forme de réalisation du système unidirectionnel montré à la figure 1, la distance entre le pivot 13 sur lequel est montée la tourelle 12 et les rotules 15, 16 est telle que cette tourelle 12 oscille d'un angle inférieur à celui de la moyenne du braquage des deux roues 4 portées par l'essieu 1.

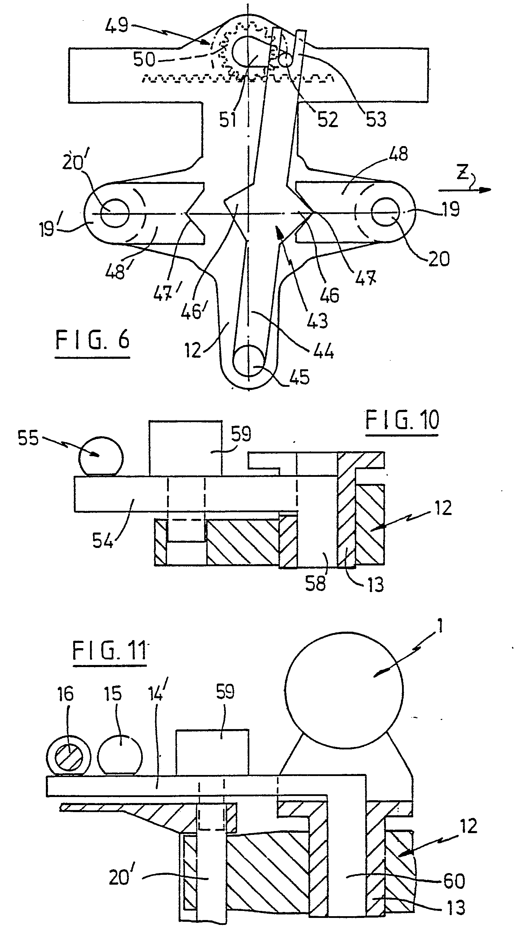

Comme on le voit aux figures 5 et 6, un dispositif d'inversion du sens de marche, désigné dans son ensemble par la notation de référence 43 et permettant d'empêcher un des deux bras de support 10, 10' portant respectivement le premier et le second galets 7, 7' de pivoter horizontalement par rapport à la tourelle 12, comprend un levier d'inversion du sens de marche 44 oscillant à une extrémité sur un tourillon 45 porté par la tourelle 12 et muni de chaque côté d'un bossage 46, 46' susceptible de s'engager dans un logement 47, 47' ménagé dans un prolongement 48, 48', éventuellement confondu avec les appendices inférieurs 21, 21', du croisillon 19, 19'.

Le levier d'inversion de marche 44 est actionné par un dispositif hydromécanique à crémaillère, qui est désigné dans son ensemble par la notation de référence 49 et qui comporte un pignon 50 fixé à une extrémité d'une manivelle 51, dont l'autre extrémité porte une broche 52 guidée dans une fourchette 53 ménagée à l'extrémité du levier 44, opposée à l'extrémité portant le tourillon 45 de ce levier 44.

La direction de marche du véhicule est sélectionnée par le dispositif d'inversion 43. Celui-ci solidarise, par exemple, pour le sens de la marche Z, le bras de support avant 10 de la tourelle 12, mais permet toutefois une certaine liberté de pivotement horizontal du bras de support arrière 10'.

Le fonctionnement du système de guidage automatique bidirectionnel, illustré aux figures 5 à 7, est en tous points semblable à celui du système de guidage automatique unidirectionnel représenté aux figures 1 à 3.

En pratique, la version unidirectionnelle est préférée sur un véhicule à deux essieux ne comportant un guidage automatique qu'à l'essieu avant, alors que la version bidirectionnelle est préférée sur des véhicules rigides à deux essieux et des véhicules articulés à trois essieux au moins, équipés d'un guidage automatique à chaque essieu.

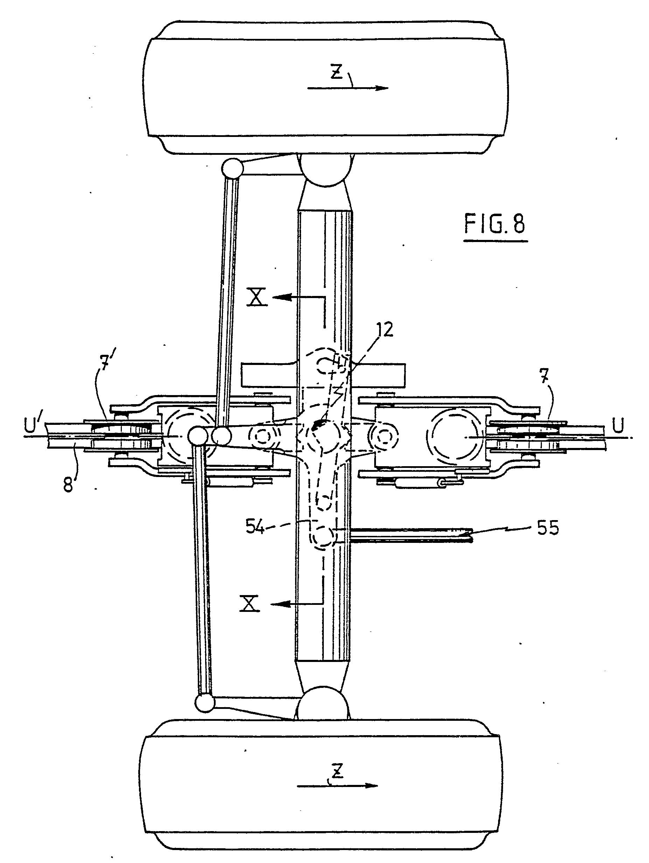

A la figure 8, la tourelle 12 comporte un bras de direction 54 destiné être commandé par un dispositif de guidage différent du rail 8, schématisé en 55.

Ce dispositif de guidage 55 autre que par rail est destiné à permettre au véhicule de circuler de manière autonome après relevage des galets 7, 7'.

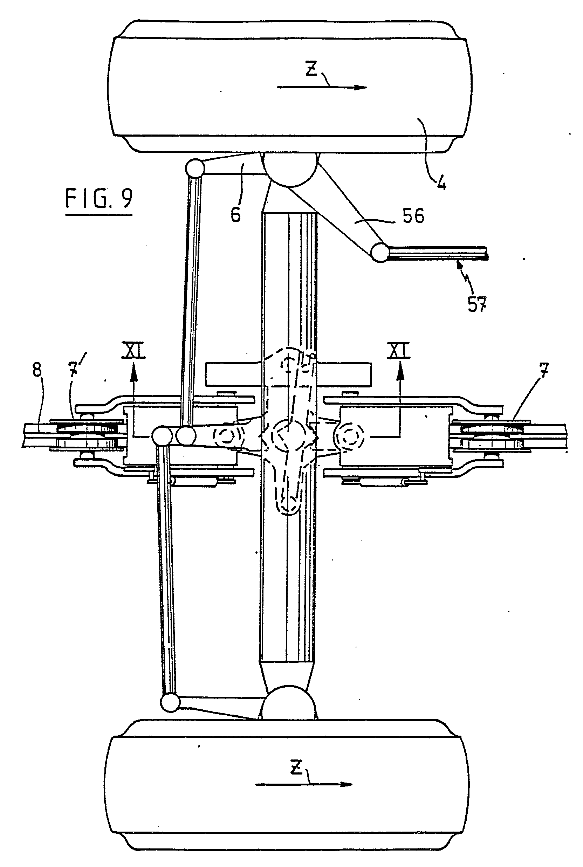

A la figure 9, un des leviers de direction 6 des roues 4 comporte une extension 56 destinée à être commandée par un dispositif de guidage 57 différent du rail 8, Ce dispositif 57 permet au véhicule de circuler de manière autonome après relevage des galets 7, 7'.

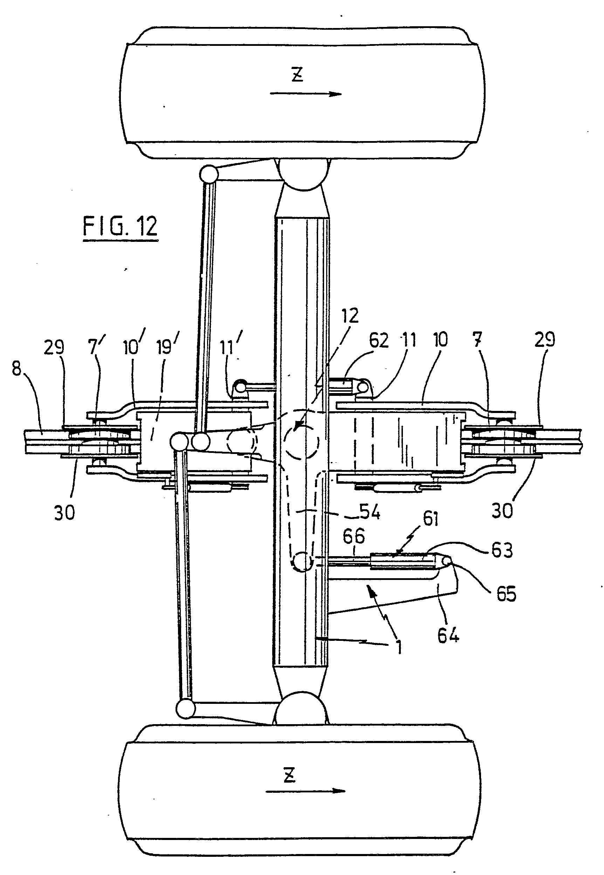

La figure 10 montre schématiquement un dispositif de guidage 55 autre que par rail 8 destiné à être associé au bras de direction 54. Ce dernier est monté sur un pivot vertical 58 concentrique au pivot 13 autour duquel peut pivoter la tourelle 12, un dispositif d'embrayage 59 étant associé au bras de direction 54 pour solidariser en vue d'un guidage autre que le rail 8 ou désolidariser en vue d'un guidage automatique ce bras 54 de la tourelle 12.

A la figure 11 qui montre un dispositif de désolidarisation du système de guidage automatique pour la conduite, par exemple manuelle, le prolongement 14' de la tourelle 12 portant les rotules 15, 16 est supporté, à une extrémité, par un pivot vertical 60 concentrique au pivot 13 portant la tourelle 12 et peut être désolidarisé, en vue d'un guidage différent du rail 8, ou être solidarisé, en vue d'un guidage automatique de la tourelle 12 ou du pivot vertical 20 ou 20', par un dispositif d'embrayage 59 associé au prolongement 14'.

Une variante du système de guidage automatique unidirectionnel ou bidirectionnel des figures 1 à 3 et 5 à 7 permettant de sélectionner la voie à suivre dans un aiguillage divergent statique est montrée à la figure 12.

Cette variante comporte en plus du système à guidage unidirectionnel montré aux figures 1 à 3 ou bidirectionnel montré aux figures 5 à 7, deux vérins à double effet 61, 62. Le premier vérin 61 agit sur le bras de direction 54 de la tourelle 12 de manière à presser contre le rail 8, un des bourrelets 29, 30 du galet 7 porté par le bras de support 10 s'étendant dans le sens de déplacement du véhicule. Ce premier vérin comporte un cylindre 63 articulé à un support 64 (axe 65) fixé à l'essieu 1 et un piston 66 articulé au bras de direction 54 de la tourelle 12. Le second vérin 62 à double effet, qui est destiné à orienter le croisillon 19' portant le bras support 10' de l'autre galet 7', orienté dans le sens opposé à celui indiqué par la flèche Z, relie les pivots horizontaux 11, 11' portant les bras de support 10, 10' des galets 7, 7'. Ces vérins 61 et 62 agissent de manière à presser contre le rail 8, les bourrelets 29, 30 de chaque galet 7, 7', ces bourrelets étant situés du même côté du rail 8. De ce fait, les galets 7, 7' sélectionnent la face du rail de guidage 8 à suivre et donc la branche à suivre dans un aiguillage divergent statique.

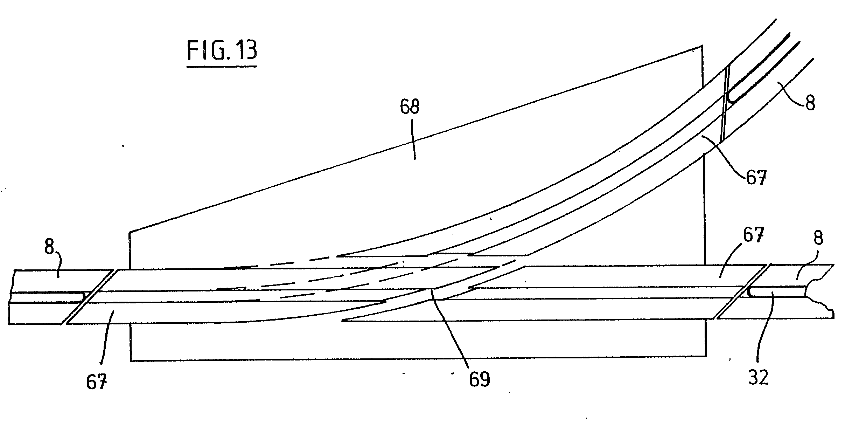

La figure 13 montre un tel aiguillage de dédoublement gauche composé de tronçons 67 d'un rail semblable à celui montré à la figure 4. Cet aiguillage se compose d'un châssis 68 sur lequel sont fixés les tronçons de rails 67 dont les extrémités adjacentes à une zone de dédoublement 69 sont profilées de manière à permettre aux bourrelets 29, 30 de chaque galet 7, 7' de franchir l'aiguillage.

Dans la zone de dédoublement 68, la saillie 32 du rail 8 destinée à s'engager dans la gorge de chaque galet 7, 7' est interrompue de façon à ne pas entraver le franchissement de l'aiguillage.

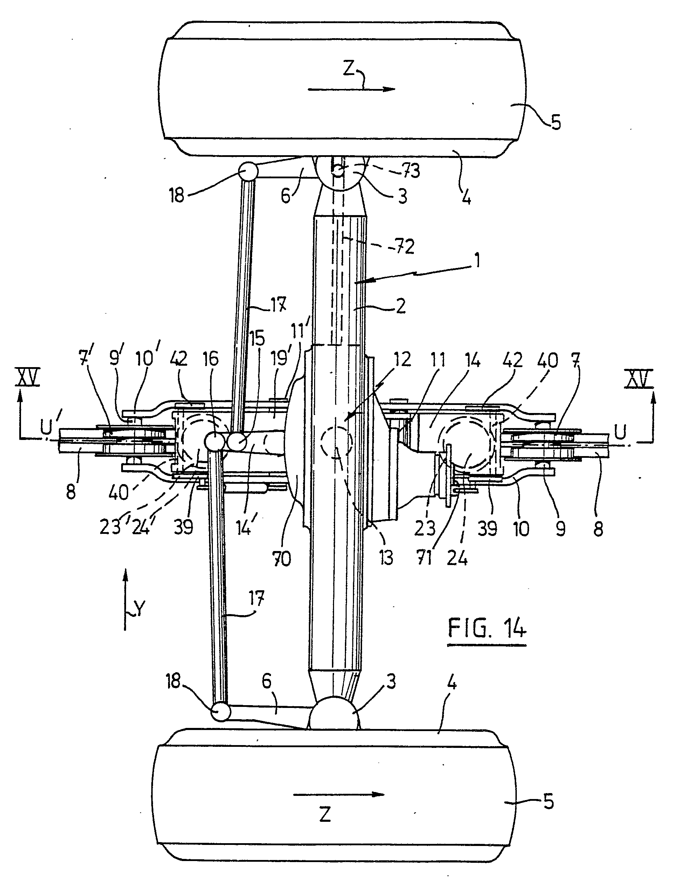

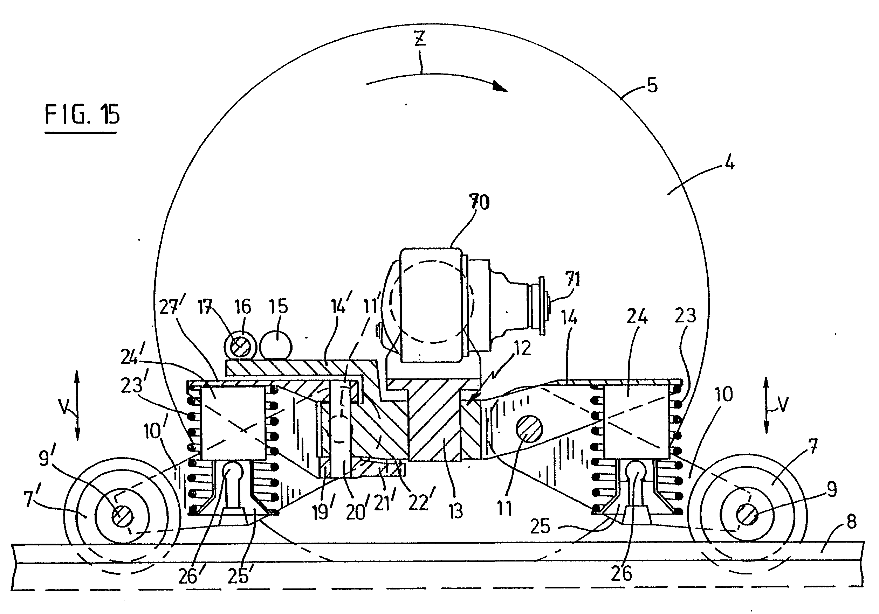

Comme montré aux figures 14 et 15, les roues à bandage pneumatique de l'essieu directionnel équipé d'un système de guidage suivant l'invention peuvent être rendues motrices.

Dans ce but, un différentiel 70, relié à un arbre moteur 71, transmet l'effort moteur à un arbre de roue 72, relié à la roue motrice 4, par l'intermédiaire d'un cardan 73.

Il est évident que l'invention n'est pas limitée aux détails décrits plus haut pour réaliser le système de guidage automatique et que de nombreuses modifications peuvent être apportées à ces détails sans sortir du cadre de l'invention.

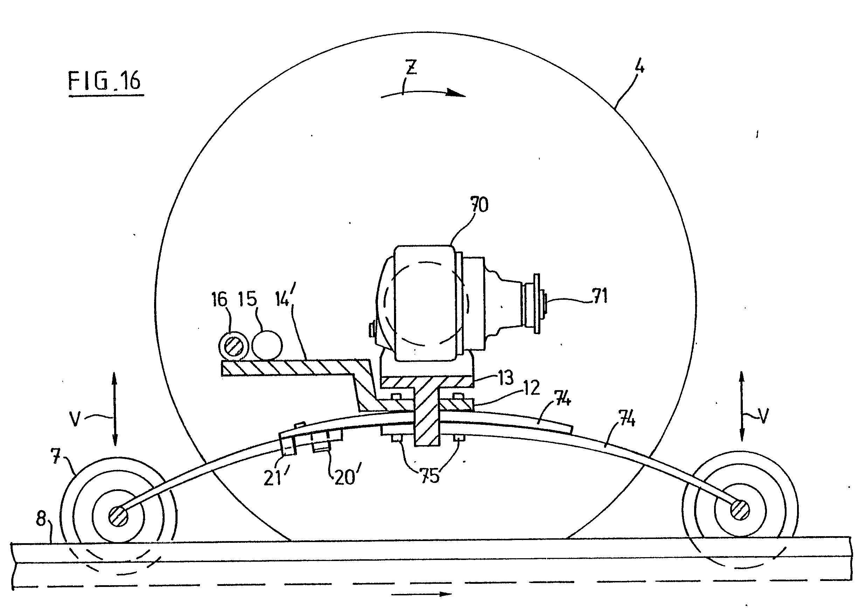

Ainsi, le système peut comporter des bras pouvant osciller verticalement grâce à leur flexibilité dans le plan vertical. De tels bras sont par exemple constitués de ressorts à lame 74 et fixés à la tourelle 12 par des boulons 75, comme montré à la figure 16.

Le système de guidage suivant l'invention peut équiper non seulement l'essieu avant d'un véhicule rigide, mais également l'essieu arrière de ce véhicule. Il peut également équiper indépendamment plusieurs ou tous les essieux d'un véhicule articulé, indépendamment du fait que ces essieux soient montés sur cercle à billes ou qu'ils comportent des fusées d'axe des roues.

Le système de guidage automatique suivant l'invention présente notamment les avantages suivants:

— le système de guidage peut être monté soit sur l'essieu avant, soit sur tous les essieux du véhicule;

— un montage du système suivant l'invention sur tous les essieux permet de réduire l'emprise du véhicule, parce que tous les essieux suivent la même trace en guidage automatique;

— le système peut être soit unidirectionnel, soit bidirectionnel;

— le rail de guidage peut être installé soit en site public, soit en site propre;

— le système autorise croisements et aiguillages tant en site public qu'en site propre;

— les galets assurent le retour du courant électrique par roulement et non par friction;

— lorsqu'il sert également à assurer le retour de courant électrique, le système de guidage permet la captation de ce courant sur un seul fil aérien par pantographe, ce qui évite la nécessité de prévoir des aiguillages aériens mobiles et des dispositifs automatiques de repositionnement des trolleys de captation de courant;

— la captation aérienne de courant électrique et le retour de celui-ci au niveau du sol dans le système de guidage automatique suivant l'invention simplifient la résolution des problèmes d'isolation électrique;

— les galets sont relevables lorsque le véhicule est destiné à circuler de manière autonome sur site routier;

— les galets sont fermement appliqués sur le rail par une double suspension qui rend le guidage fiable, quelle que soit la charge utile du véhicule;

— les efforts transversaux sont en premier lieu repris par les roues à bandage pneumatique;

— les galets permettent de retenir l'essieu en cas de dérapage latéral;

— le débrayage du système de guidage offre l'avantage de permettre un braquage plus important des roues en conduite manuelle;

— les véhicules munis du système de guidage automatique suivant l'invention installé sur tous les essieux peuvent être accouplés en rames.

**Revendications**

1. Système de guidage automatique d'un véhicule du type bimode (guidage soit automatique, soit manuel), muni d'au moins un essieu directionnel (1) portant des roues (4) à bandage pneumatique, éventuellement motrices, comprenant au moins un premier galet (7) destiné à suivre un rail (8) s'étendant dans l'axe longitudinal de la voie de roulement du véhicule, ou parallèlement à cet axe, et porté par un bras de support (10) s'étendant dans le sens de déplacement du véhicule par rapport à l'essieu directionnel (1), ce bras de support (10) pouvant osciller verticalement autour d'un axe sensiblement horizontal (11) et étant assujetti à une tourelle (12) montée sur un pivot (13) sensiblement vertical porté par ledit essieu directionnel ou par le véhicule et reliée à au moins une barre d'accouplement (17) articulée à un levier de direction (6) d'une des roues portées par l'essieu directionnel et au moins un second galet (7') porté par un second bras de support (10') s'étendant dans le sens opposé au sens de déplacement du véhicule par rapport à l'essieu directionnel, ce second bras (10') pouvant également osciller verticalement autour d'un axe (11') sensiblement horizontal, ce système étant caractérisé en ce que ce second bras (10') est assujetti à la tourelle (12) de manière à pouvoir pivoter horizontalement autour d'un pivot (20') sensiblement vertical, indépendamment de la tourelle (12) susdite, dans une mesure prédéterminée.

2. Système suivant la revendication 1, caractérisé en ce que le bras de support (10') s'étendant dans le sens opposé au sens de déplacement du véhicule est articulé à la tourelle par un pivot (11') sensiblement horizontal porté par un croisillon (19') qui peut tourillonner indépendamment de la tourelle (12), dans une mesure prédéterminée, autour d'un pivot sensiblement vertical porté par la tourelle (12).

3. Système suivant la revendication 2, caractérisé en ce que la tourelle (12) porte des butées (22') limitant le pivotement horizontal du croisillon (19').

4. Système suivant la revendication 1, caractérisé en ce que le bras de support (10) du premier galet (7) est assujetti à la tourelle (12) montée sur le pivot (13) porté par l'essieu directionnel (1) ou par le véhicule, de manière à pouvoir également pivoter horizontalement autour d'un pivot sensiblement vertical (20), indépendamment de la tourelle (12), dans une mesure prédéterminée et en ce qu'il comporte des moyens pour empêcher un des deux bras de support (10, 10') portant respectivement le premier et le second galets (7, 7') de pivoter horizontalement autour desdits pivots sensiblement verticaux (20) et (20') distincts du pivot (13) de la tourelle (12).

5. Système suivant les revendications 2 et 4, caractérisé en ce que les moyens pour empêcher un des deux bras (10, 10') portant respectivement le premier et le second galets (7, 7') de pivoter horizontalement autour dudit pivot sensiblement vertical (20, 20'), comprennent un levier d'inversion de marche (44) articulé à une extrémité à un tourillon (45) porté par la tourelle (12) et muni de chaque côté d'un bossage (46, 46') susceptible de s'engager dans un logement ménagé dans un prolongement (48, 48') d'un croisillon (19, 19') porté par un pivot (11, 11') sensiblement horizontal dudit bras de support (10, 10'), le levier d'inversion du sens de marche (44) étant actionné par des moyens (49) à mouvement alternatif de façon à amener un des bossages (46, 46') dudit levier (44) dans le logement correspondant (47, 47') du prolongement (48, 48') du croisillon (19, 19') et à dégager l'autre bossage (46', 46).

6. Système suivant la revendication 5, caractérisé en ce que les moyens à mouvement alternatif sont constitués par un dispositif hydromécanique à crémaillère (49) comportant un pignon (50) fixé à une extrémité d'une manivelle (51) dont l'autre extrémité porte une broche (52) guidée dans une fourchette (53) ménagée à l'extrémité du levier (44) susdit, opposée à l'extrémité portant le tourillon (45) de ce levier (44).

7. Système suivant l'une quelconque des revendications précédentes, caractérisé en ce que chaque galet (7, 7') susdit est maintenu en contact avec le rail (8) par un système de suspension.

8. Système suivant la revendication 7, caractérisé en ce que le système de suspension comporte deux éléments de suspension distincts, aptes à maintenir chacun séparément les galets (7, 7') en contact avec le rail (8).

9. Système suivant la revendication 8, caractérisé en ce que le système de suspension comprend un ressort hélicoïdal (23) et un dispositif pneumatique (24) sensiblement coaxiaux.

10. Système suivant la revendication 9, caractérisé en ce que le premier galet (7) est maintenu en contact avec le rail (8) par un système de suspension constitué par un ressort hélicoïdal (23) prenant appui d'une part sur un prolongement (27) du croisillon (19) et d'autre part sur une embase (25) supportée par un dispositif à articulation (26) porté par le bras de support (10), ainsi que par un dispositif pneumatique (24) prenant également appui sur le prolongement (27) du croisillon (19) et sur une embase (25) supportée par un dispositif à articulation (26).

11. Système suivant la revendication 9, caractérisé en ce que le second galet (7') est maintenu en contact avec le rail (8) par un système de suspension constitué par un ressort hélicoïdal (23') prenant appui d'une part sur un prolongement (27') du croisillon (19') et d'autre part sur une embase supportée par un dispositif à articulation, porté par le second bras de support, ainsi que par un dispositif pneumatique (24') prenant également appui sur ledit prolongement (27') du croisillon (19') et sur l'embase (25') supportée par le dispositif à articulation (26').

12. Système suivant l'une quelconque des revendications précédentes, caractérisé en ce qu'il comporte des moyens de relevage des bras de support (10, 10') des galets (7, 7').

13. Système suivant la revendication 12, caractérisé en ce que les moyens de relevage des bras de support des galets comportent un vérin de relevage à double effet comprenant un cylindre (36) monté sur le pivot horizontal (11') du bras de support (10') et un piston (37), articulé en (38) à une extrémité d'un levier (39), dont l'extrémité opposée est articulée par l'intermédiaire d'un arbre (40) au prolongement (27) du croisillon (19), respectivement au prolongement (27') du croisillon (19'), ainsi que, de chaque côté du bras de support (10'), un câble (41) dont une extrémité est attachée à un bras de support (10') d'un galet (7') et dont l'autre extrémité est attachée respectivement au levier précité d'un côté du bras de support (10) et à une manivelle (42) solidaire de ce levier (39) par l'arbre (40'), de l'autre côté du bras de support (10').

14. Système suivant l'une quelconque des revendications précédentes, caractérisé en ce qu'une gorge périphérique (31) est ménagée dans l'âme de chaque galet (7, 7') de telle sorte que ce galet présente, de part et d'autre de cette gorge (31), une bande de roulement (33, 34) de ce galet (7, 7') sur le rail (8) et le rail (8) présente une saillie (32) destinée à s'engager dans la gorge périphérique (31) de ce galet (7, 7').

15. Système suivant l'une quelconque des revendications précédentes, caractérisé en ce qu'il comporte un dispositif de guidage (55, 57) autre que par rail de guidage, éventuellement manuel, ce dispositif de guidage (55, 57) commandant l'orientation des roues 4 du véhicule par l'intermédiaire de la tourelle (12) ou par l'intermédiaire d'un des leviers de direction (6) des roues (4).

16. Système suivant la revendication 15, caractérisé en ce que le dispositif de guidage (55) autre que par rail est équipé d'un dispositif d'embrayage (59) pour le solidariser ou le désolidariser du dispositif de guidage par rail.

17. Système suivant l'une quelconque des revendications précédentes, caractérisé en ce qu'il est muni de moyens, prévus dans le véhicule, permettant à volonté d'engager les galets (7 et 7') dans l'une des voies d'un aiguillage statique divergent.

18. Système suivant la revendication 1, caractérisé en ce que chacun des bras (10, 10') peut osciller verticalement grâce à sa flexibilité dans le plan vertical.

19. Système suivant la revendication 18, caractérisé en ce que chacun des bras de support flexibles susdits est constitué de ressorts à lames (74).

20. Véhicule du type bimode équipé d'au moins un essieu directionnel équipé d'un système de guidage automatique suivant l'une quelconque des revendications précédentes.

21. Véhicule suivant la revendication 20, caractérisé en ce qu'il est rigide.

22. Véhicule suivant la revendication 20, caractérisé en ce qu'il est articulé.

**Patentansprüche**

1. Automatisches Lenkungssystem eines Fahrzeugs des Typs mit zwei Betriebsarten (entweder selbstlenkend oder handbedient), versehen mit mindestens einer luftbereifte, gegebenenfalls antreibende, Räder (4) tragenden Lenkachse (1), welche Räder mindestens eine erste Rolle (7) zum Folgen einer sich entlang der Längsachse des Fahrwegs des Fahrzeugs oder parallel zu dieser Achse erstreckenden Schiene (8) umfassen, welche Rolle von einem sich in bezug auf die Lenkachse (1) in Verschieberichtung des Fahrzeugs erstreckenden Trägerarm (10) getragen ist, welcher Trägerarm (10) um eine im wesentlichen horizontale Achse (11) vertikal auf- und abbewegbar ist und an einem Drehschemel (12) befestigt ist, welcher auf einem im wesentlichen vertikalen, von der Lenkachse oder dem Fahrzeug getragenen und mit mindestens einer an einem Lenkhebel (6) einer der von der Lenkachse getragenen Räder angelenkten Spurstange (17) verbundenen Schwenkzapfen (13) gelagert ist, und mindestens eine zweite Rolle (7') umfassen, die von einem zweiten, sich in zur Verschieberichtung des Fahrzeugs in bezug auf die Lenkachse in entgegengesetzter Richtung erstreckenden Trägerarm (10') getragen ist, welcher Trägerarm (10') ebenfalls vertikal um eine im wesentlichen horizontale Achse (11') auf- und abbewegbar ist, dadurch gekennzeichnet, daß dieser zweite Arm (10') um einen im wesentlichen vertikalen Schwenkzapfen (20') unabhängig vom Drehschemel (12) um ein vorbestimmtes Maß horizontal schwenkbeweglich am Drehschemel (12) befestigt ist.

2. System nach Anspruch 1, dadurch gekennzeichnet, daß der sich in zur Verschieberichtung des Fahrzeugs entgegengesetzter Richtung erstreckende Trägerarm (10') mittels eines im wesentlichen horizontalen, von einem Kreuzstück (19') getragenen Schwenkzapfens (11') am Drehschemel angelenkt ist, wobei das Kreuzstück unabhängig vom Drehschemel (12) um ein vorbestimmtes Maß um einen im wesentlichen vertikalen, vom Drehschemel (12) getragenen Schwenkzapfen drehbar ist.

3. System nach Anspruch 2, dadurch gekennzeichnet, daß der Drehschemel (12) Anschläge (22') zum Begrenzen der horizontalen Schwenkbewegung des Kreuzstücks (19') trägt.

4. System nach Anspruch 1, dadurch gekennzeichnet, daß der Trägerarm (10) der ersten Rolle (7) an dem auf dem von der Lenkachse (1) oder dem Fahrzeug getragenen Schwenkzapfen (13) gelagerten Drehschemel (12) derart befestigt ist, daß er auch horizontal um einen im wesentlichen vertikalen Schwenkzapfen (20) unabhängig vom Drehschemel (12) um ein vorbestimmtes Maß schwenkbar ist, und daß es Mittel zum Hindern eines der beiden die erste bzw. die zweite Rolle (7, 7') tragenden Trägerarme (10, 10') am horizontalen Schwenken um die im wesentlichen vertikalen Schwenkzapfen (20) und (20'), die vom Schwenkzapfen (13) des Drehschemels (12) getrennt sind, umfaßt.

5. System nach den Ansprüchen 2 und 4, dadurch gekennzeichnet, daß die Mittel zum Hindern eines der beiden die erste bzw. die zweite Rolle (7, 7') tragenden Trägerarme (10, 10') am horizontalen Schwenken um die im wesentlichen vertikalen Schwenkzapfen (20, 20') einen Hebel (44) zur Bewegungsumkehr umfassen, welcher mit einem Ende an einem vom Drehschemel (12) getragenen Drehzapfen (45) angelenkt und auf jeder Seite mit einem Höcker (46, 46') versehen ist, der in eine Aufnahme in Eingriff bringbar ist, welche in einer Verlängerung (48, 48') eines von einem im wesentlichen horizontalen Schwenkzapfen (11, 11') des Trägerarms (10, 10') getragenen Kreuzstücks (19, 19') vorgesehen ist, wobei der Hebel (44) zur Bewegungsumkehr durch Umkehrbewegungsmittel (49) derart betätigt wird, daß er einen der Höcker (46, 46') des Hebels (44) in die entsprechende Aufnahme (47, 47') der Verlängerung (48, 48') des Kreuzstücks (19, 19') führt und den anderen Hökker (46, 46') daraus freisetzt.

6. System nach Anspruch 5, dadurch gekennzeichnet, daß die Umkehrbewegungsmittel durch eine hydromechanische Einrichtung mit Zahnstange (49) gebildet ist, welche ein Ritzel (50) umfaßt, das an einem Ende einer Kurbel (51) befestigt ist, deren anderes Ende einen Dorn (52) trägt, der in einer an dem den Drehzapfen (45) tragenden Ende des Hebels (44) gegenüberliegenden Ende dieses Hebels (44) vorgesehenen Gabel (53) geführt ist.

7. System nach einem der vorhergehenden Ansprüche, dadurch gekennzeichnet, daß jede Rolle (7, 7') durch ein Aufhängungssystem mit der Schiene (8) in Kontakt gehalten ist.

8. System nach Anspruch 7, dadurch gekennzeichnet, daß das Aufhängungssystem zwei separate Aufhängungselemente zum getrennten Halten der Rollen (7, 7') in Kontakt mit der Schiene (8) umfaßt.

9. System nach Anspruch 8, dadurch gekennzeichnet, daß das Aufhängungssystem eine Schraubenfeder (23) und eine pneumatische Einrichtung (24) umfaßt, die im wesentlichen koaxial sind.

10. System nach Anspruch 9, dadurch gekennzeichnet, daß die erste Rolle (7) in Kontakt mit der Schiene (8) durch ein Aufhängungssystem gehalten ist, welches durch eine Schraubenfeder (23) gebildet ist, die sich einerseits an einer Verlängerung (27) des Kreuzstücks (19) und anderseits auf einem Sockel (25) abstützt, der durch eine vom Trägerarm (10) getragene Anlenkeinrichtung (26) gehaltert ist, sowie durch eine pneumatische Einrichtung (24) gebildet ist, die sich ebenfalls an der Verlängerung (27) des Kreuzstücks (19) und auf einem von einer Anlenkeinrichtung (26) gehalterten Sockel (25) abstützt.

11. System nach Anspruch 9, dadurch gekennzeichnet, daß die zweite Rolle (7') in Kontakt mit der Schiene (8) durch ein Aufhängungssystem gehalten ist, welches durch eine Schraubenfeder (23') gebildet ist, die sich einerseits an einer Verlängerung (27') des Kreuzstücks (19') und anderseits auf einem Sockel abstützt, der durch eine vom zweiten Trägerarm getragene Anlenkeinrichtung gehaltert ist, sowie durch eine pneumatische Einrichtung (24') gebildet ist, die sich ebenfalls an der Verlängerung (27') des Kreuzstücks (19') und auf dem von der Anlenkeinrichtung (26') gehalterten Sockel (25') abstützt.

12. System nach einem der vorhergehenden Ansprüche, dadurch gekennzeichnet, daß es Mittel zum Heben der Trägerarme (10, 10') der Rollen (7, 7') umfaßt.

13. System nach Anspruch 12, dadurch gekennzeichnet, daß die Mittel zum Heben der Trägerarme der Rollen einen doppeltwirkenden Hubzylinder mit einem am horizontalen Schwenkzapfen (11') des Trägerarms (10') gelagerten Zylinder (36) und einem bei (38) an einem Ende eines Hebels (39) angelenkten Kolben (37) umfassen, wobei das gegenüberliegende Ende des Hebels mittels einer Welle (40) an der Verlängerung (27) des Kreuzstücks (19) bzw. and der Verlängerung (27') des Kreuzstücks (19') angelenkt ist, sowie auf jeder Seite des Trägerarms (10') ein Seil (41) umfassen, dessen eines Ende an einem Trägerarm (10') einer Rolle (7') befestigt und dessen anderes Ende am genannten Hebel auf einer Seite des Trägerarms (10) bzw. an einer mit diesem Hebel (39) über eine Welle (40') verbundenen Kurbel (42), die an der anderen Seite des Trägerarms (10') vorgesehen ist, befestigt ist.

14. System nach einem der vorhergehenden Ansprüche, dadurch gekennzeichnet, daß eine periphere Rille (31) im Steg jeder Rolle (7, 7') derart vorgesehen ist, daß diese Rolle zu beiden Seiten dieser Rille (31) eine Lauffläche (33, 34) dieser Rolle (7, 7') auf der Schiene (8) aufweist und die Schiene (8) einen Vorsprung (32) zum Eingreifen in die periphere Rille (31) dieser Rolle (7, 7') aufweist.

15. System nach einem der vorhergehenden Ansprüche, dadurch gekennzeichnet, daß es eine weitere, gegebenenfalls handbediente, Führungseinrichtung (55, 57) zur Führungsschiene umfaßt, welche Führungseinrichtung (55, 57) die Ausrichtung der Räder (4) des Fahrzeugs mittels des Drehschemels (12) oder mittels eines der Lenkhebel (6) der Räder (4) steuert.

16. System nach Anspruch 15, dadurch gekennzeichnet, daß die Nichtschienen-Führungseinrichtung (55) mit einer Kupplungseinrichtung (59) zum Verbinden oder Lösen derselben mit bzw. von der Schienen-Führungseinrichtung ausgestattet ist.

17. System nach einem der vorhergehenden Ansprüche, dadurch gekennzeichnet, daß es mit im Fahrzeug vorgesehenen Mitteln zum wahlweisen Eingreifen der Rollen (7, 7') in eine der Bahnen einer auseinandergehenden statischen Verzweigung versehen ist.

18. System nach Anspruch 1, dadurch gekennzeichnet, daß jeder der Arme (10, 10') aufgrund seiner Flexibilität in der vertikalen Ebene vertikal oszillierfähig ist.

19. System nach Anspruch 18, dadurch gekennzeichnet, daß jeder der flexiblen Trägerarme durch Blattfedern (74) gebildet ist.

20. Fahrzeug des Typs mit zwei Betriebsarten, das mit mindestens einer mit einem automatischen Führungssystem nach einem der vorhergehenden Ansprüche versehenen Lenkachse ausgestattet ist.

21. Fahrzeug nach Anspruch 20, dadurch gekennzeichnet, daß es starr ist.

22. Fahrzeug nach Anspruch 20, dadurch gekennzeichnet, daß es gelenkig ist.

**Claims**

1. A system for automatically guiding a vehicle of two-mode type, the guidance being either automatic or manual, provided with at least one steering axle (1) carrying wheels (4) with pneumatic tyres, the wheels being optionally driving wheels, comprising at least one first roller (7) intended to follow a rail (8) extending along the longitudinal axis of the roadway for the vehicle, or parallel to that axis, and carried by a support arm (10) extending in the direction of movement of the vehicle in relation to the steering axle (1), this support arm (10) being able to swing vertically about a substantially horizontal axis (11) and being secured to a turret (12) mounted on a substantially vertical pivot (13) carried by said steering axle or by the vehicle and connected to at least one track rod (17) articulated to a steering arm (6) of one of the wheels carried by the steering axle and at least one second roller (7') carried by a second support arm (10') extending in the opposite direction, in relation to the steering axle, to the direction of movement of the vehicle, the second arm (10') also being able to swing vertically about a substantially horizontal axis (11'), the system being characterised in that the second arm (10') is mounted to the turret (12) so as to be able to pivot horizontally to a predetermined extent independently of the aforementioned turret (12) about a substantially vertical pivot (20').

2. A system according to Claim 1, characterised in that the support arm (10') extending in the opposite direction to the direction of movement of the vehicle is articulated to the turret by a substantially horizontal pivot (11') carried by an intermediate member (19') which can swivel, independently of the turret (12), to a predetermined extent, about a substantially vertical pivot carried by the turret (12).

3. A system according to Claim 2, characterised in that the turret (12) carries stop members (22') limiting the horizontal pivoting of the intermediate member (19').

4. A system according to Claim 1, characterised in that the support arm (10) of the first roller (7) is secured to the turret (12) mounted on the pivot (13) carried by the steering axle (1) or by the vehicle so as to be able to pivot horizontally to a predetermined extent independently of the turret (12) about a substantially vertical pivot (20'), and in that it comprises means for preventing one of the two support arms (10, 10') carrying respectively the first and second rollers (7, 7') from pivoting horizontally about said substantially vertical pivots (20) and (20') separate from the pivot (13) of the turret (12).

5. A system according to Claims 2 and 4, characterised in that the means for preventing one of the two arms (10, 10') carrying respectively the first and second rollers (7, 7') from pivoting horizontally about said substantially vertical pivot (20, 20') comprise a reversing lever (44) articulated at one end to a pivot (45) carried by the turret (12) and provided on either side with a projection (46, 46') capable of engaging in a recess provided in an extension (48, 48') of an intermediate member (19, 19') carried by a substantially horizontal pivot (11, 11') of said support arm (10, 10'), the lever (44) for reversing the direction of travel (44) being actuated by recipr-rocatable means (49) so as to bring one of the projections (46, 46') of said lever (44) into the corresponding recess (47, 47') of the extension (48, 48') of the intermediate member (19, 19') and to disengage the other projection (46', 46).

6. A system according to Claim 5, characterised in that the reciprocating means are formed by a hydraulic rack device (49) comprising a pinion (50) fixed to one end of a crank (51), the other end of which carries a pin (52) guided in a fork (53) provided at the end of the aforementioned lever (44) opposite the end carrying the pivot (45) of that lever (44).

7. A system according to any one of the preceding Claims, characterised in that each aforementioned roller (7, 7') is maintained in contact with the rail (8) by a suspension system.

8. A system according to Claim 7, characterised in that the suspension system comprises two separate suspension elements intended separately to maintain respective ones of the rollers (7, 7') in contact with the rail (8).

9. A system according to Claim 8, characterised in that the suspension system comprises a helical spring (23) and a pneumatic device (24) which are substantially coaxial.

10. A system according to Claim 9, characterised in that the first roller (7) is maintained in contact with the rail (8) by a suspension system formed by a helical spring (23) bearing, at one end, against an extension (27) of the intermediate member (19) and, at the other end, against a seating (25) supported by an articulation means (26) carried by the support arm (10), and also by a pneumatic device (24) likewise acting between the extension (27) of the intermediate member (19) and a seating (25) supported by an articulation means (26).

11. A system according to Claim 9, characterised in that the second roller (7') is maintained in contact with the rail (8) by a suspension system formed by a helical spring (23') bearing, at one end, against an extension (27') of the intermediate member (19') and, at the other end, against a base supported by an articulation means carried by the second support arm, and also by a pneumatic device (24') likewise acting between said extension (27') of the intermediate member (19') and the base (25') supported by the articulation means (26').

12. A system according to any one of the preceding Claims, characterised in that it comprises means for raising the support arms (10, 10') of the rollers (7, 7').

13. A system according to Claim 12, characterised in that the means for raising the support arms of the rollers comprise a double-acting lifting actuator comprising a cylinder (36) mounted on the horizontal pivot (11') of the support arm (10') and a piston (37), articulated (at 38) to one end of a lever (39), the opposite end of which is articulated by means of a shaft (40) to the extension (27) of the intermediate member (19), respectively to the extension (27') of the intermediate member (19'), and also, on each side of the support arm (10'), a cable (41), one end of which is attached to a support arm (10') of a roller (7') and of which the other end is attached respectively to the aforementioned lever on one side of the support arm (10) and to a crank (42) secured fast to this lever (39) by the shaft (40'), on the other side of the support arm (10').

14. A system according to any one of the preceding Claims, characterised in that a peripheral groove (31) is provided in the core of each roller (7, 7') so that the roller has, on either side of said groove (31), a surface (33, 34) of the roller (7, 7') for running on the rail (8) and the rail (8) has a projection (32) intended to engage in the peripheral groove (31) of the roller (7, 7').

15. A system according to any one of the preceding Claims, characterised in that it comprises a means, optionally manual, for guidance (55, 57) other than by guide rail, said guidance means (55, 57) controlling the steering of the wheels (4) of the vehicle by means of the turret (12) or by means of one of the steering arms (6) of the wheels (4).

16. A system according to Claim 15, characterised in that the means for guidance (55) other than by rail is provided with a coupling device (59) for engaging it with or disengaging it from the device for guidance by rail.

17. A system according to any one of the preceding Claims, characterised in that it is provided with means, provided in the vehicle, making it possible, at will, for the rollers (7 and 7') to be engaged in one of the branches of a diverging static set of points.

18. A system according to Claim 1, characterised in that, as a result of their flexibility in the vertical plane, each of the arms (10, 10') can swing vertically.

19. A system according to Claim 18, characterised in that each of the above-mentioned flexible support arms is formed by leaf springs (74).

20. A vehicle of two-mode type equipped with at least one steering axle provided with an automatic guidance system according to any one of the preceding Claims.

21. A vehicle according to Claim 20, characterised in that it is not an articulated vehicle.

22. A vehicle according to Claim 20, characterised in that it is an articulated vehicle.

FIG. 1

FIG. 2

FIG. 3

FIG. 4

FIG. 5

FIG. 6

FIG. 10

FIG. 11

FIG. 7

FIG. 8

FIG. 9

FIG. 12

FIG. 13

FIG. 14

FIG. 15

FIG.16

0 062 370